Europäisches Patentamt

European Patent Office

Office européen des brevets

(11) Publication number: **0 273 480**
**A1**

## (12) EUROPEAN PATENT APPLICATION

(21) Application number: 87202282.7

(51) Int. Cl.⁴: **B60R 9/04**

(22) Date of filing: 20.11.87

(30) Priority: 25.11.86 IT 2244786

(43) Date of publication of application:
06.07.88 Bulletin 88/27

(84) Designated Contracting States:
AT BE CH DE ES FR GB GR IT LI LU NL SE

(71) Applicant: **Gaddi, Sergio**
**Via Risorgimento, 70**
**I-22054 Mandello del Lario Como(IT)**

(72) Inventor: **Gaddi, Sergio**
**Via Risorgimento, 70**
**I-22054 Mandello del Lario Como(IT)**

(74) Representative: **Riccardi, Sergio**
**Riccardi & Co. Via Macedonio Melloni, 32**
**I-20129 Milano(IT)**

(54) **Fastening for roofracks, skiracks and similar devices particularly in the case of vehicles with roofs which do not have runnels.**

(57) A fastening is described which solves the problem of securely fixing roof-racks, ski-racks and similar equipment on cars with roofs without runnels, by means of a tensioning system (1) based on the use of an articulated trapezium (5,10,11) which is subjected to tension by manual adjustments to a threaded component (7) which tightens or loosens the trapezium.

Fig. 1

## "FASTENING FOR ROOFRACKS, SKIRACKS AND SIMILAR DEVICES PARTICULARLY IN THE CASE OF VEHICLES WITH ROOFS WHICH DO NOT HAVE RUNNELS"

The present invention is a fastening for roof-racks, ski-racks, racks for carrying boats and similar equipment which is particularly suitable for mounting on vehicles not provided with runnels.

It is well-known that most cars have a side runnel at the edges of the roof which acts as a kind of gutter allowing the water to run off, thus stopping water from infiltrating into the upper section of the doors, and in particular having a conformation which permits the mounting of roof-racks and similar devices.

In fact, the technique currently in use is to rest the support rods inside this runnel with the screwing component being applied to the exterior of the aforesaid runnel, wedging it into the rabbet of the weather-strip of the door.

It is also well-known that the styling and aerodynamic studies recently carried out by most car manufacturers have led to the elimination of those runnels on the roofs, thus making it impossible to use the fastenings which are currently sold, since all attempts to adapt them to car roofs which do not have runnels have not proved to be very effective with a serious danger of loosening of the fastenings and the consequent detachment of the roof-rack or roof equipment.

The present invention is a special fastening suitable for the application of the aforesaid roof-racks, ski-racks and similar devices on cars without runnels producing a brilliant solution to a serious problem which is so important for road safety and the possibility of loading the vehicle.

It comprises a plate which has been shaped so that it can rest on the rounded edge of roofs which do not have runnels and lock onto the gasket of the door.

The aforesaid plate is integrated with a shaped plate component which is hinged to the cross-bar of the roof-rack. The brackets are locked onto the vehicle by screwing down a threaded component, which, by means of a hinged element which acts as a lever, stretches a wire, a rigid roof or a similar component screwing them down to the bodywork. In practice, the shaped plates transmit the whole load of the roof-rack to the vehicle without the predisposition of special reinforced points of application; thus making the present invention utilisable for all types of cars without runnels, since the aforesaid plates tend to grip the edge of the roof from below and, therefore, have maximum grip on the roof.

In practice, this fastening for roof-racks, ski-racks and similar devices particularly for vehicles without runnels can also have different shapes which all fall within the scope of the present invention which will be described hereinafter in greater detail, purely indicatively and in no way limiting the scope of the invention, and referring to the figures in the attached illustrative drawings, in which:

Figure 1 shows a front view of a fastening according to this invention, provided with a lever with an upper fulcrum;

Figure 2 shows, purely as an example, a view of a vehicle without runnels to which a roof-rack provided with the fastenings according to the present invention has been attached;

Figure 3 shows a side view of the fastening in Figure 1, demonstrating the component which acts on the tension rod, which locks the roof-rack onto the vehicle;

Figure 4 shows an internal front view of the fastening in Figure 3 to demonstrate the central lever which acts on the tension rod;

Figure 5 shows a side view of a second embodiment of the fastening in question, comprising a lever with fulcrum below on the bracket which is incorporated with the support plate; and

Figure 6 shows a side view of a third embodiment of the fastening in question, comprising a double stabilising lever, acting on a transversal clamping tension rod.

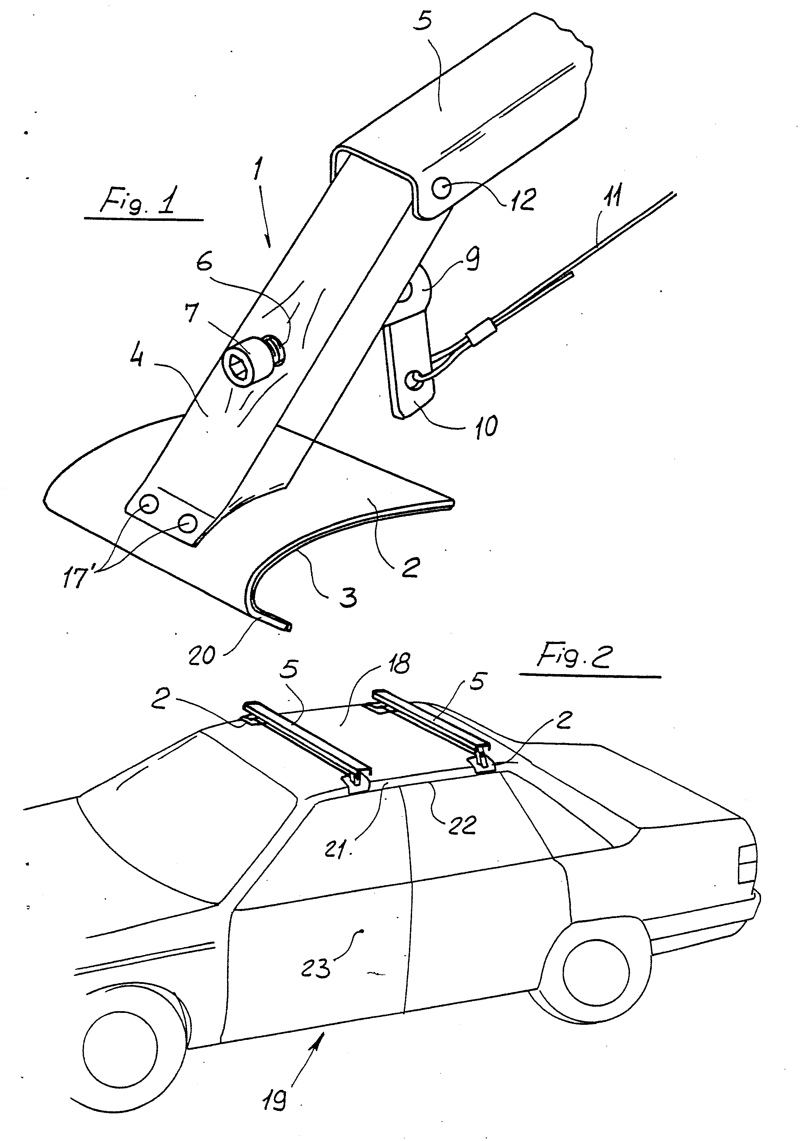

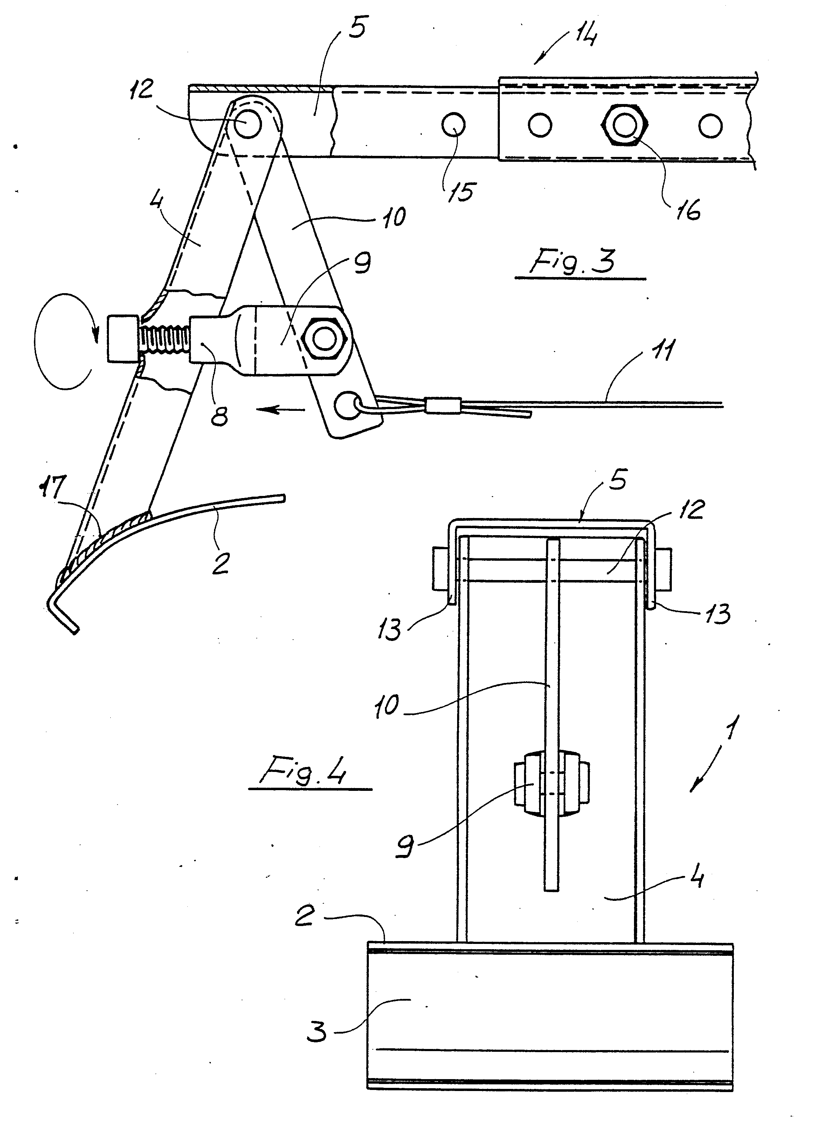

Referring to Figures 1, 2, 3, and 4, the present invention 1 comprises a shaped plate 2 provided with a gasket 3 which protects the bodywork, with an incorporated box component 4 which is hinged on the crossbeam of the roof-rack which is shaped like a reversed U.

The box component 4 has a hole 6 which is drilled, preferably but not necessarily, in a central position. A threaded component 7, complete with screw 8 forming part of the yoke 9, passes through the hole 6, changing the angulation of a second rod 10 which is also hinged to the crossbeam 5 of the roof-rack.

This second rod 10 acts as a lever, pulling transversal tension rod 11 which connects the two opposing fastenings. The threaded component 7 should be a Brugola or Allen type hexagonal head countersunk screw which can be manually tightened with the appropriate instrument.

The upper hinge is formed by a round bar 12 which is rivetted and inserted through the two side pieces 13 of the reversed box-bar component which forms the crossbeam 5 of the roof-rack.

As has already been said, this crossbeam 5 is part of a telescopic component 14 whose length can be adjusted by modular drilled holes 15 and by threaded locking nuts 16.

It must be emphasised that the load-bearing box-bar component 14 can be incorporated with the support plate 2 by a weld 17 or preferentially by rivets 17, or other mechanical methods of fixing, thus reducing the production costs without affecting the mechanical resistance.

The profile of the support plate 2 conforms to the curvature of the roofs 18 of the cars without runnels 19, the terminal external part 20 being bent in such a way as to lock between the lip 21 of the roof 18 and the seat 22 of the upper weather strip of the door 23.

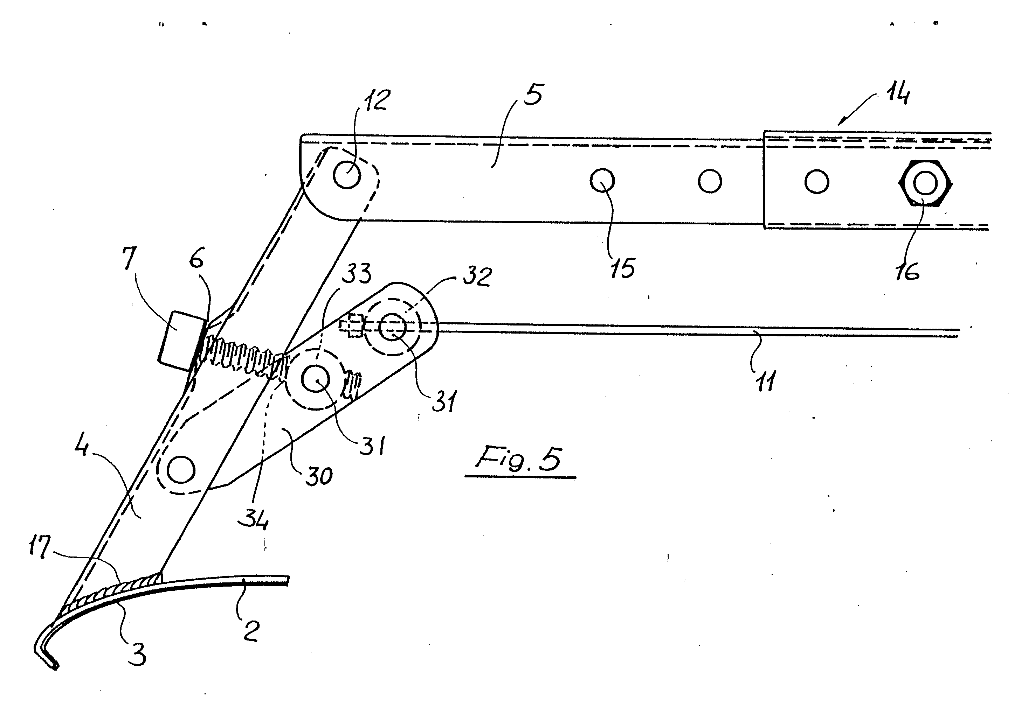

In a second embodiment and referring to Figure 5, the present invention can be implemented with a lever 30 hinged onto the load-bearing box-bar 4 in proximity to the support plate 2.

The aforesaid lever 30 can be box shaped so that it can accept the clevis pins 31 of the cylinders 32 and 33 which are respectively utilised for the tension rod 11 and for the threaded seats 34 which accept the tensioning screws 7.

The utilisation of these cylinders can also be considered preferential for other embodiments too, since they cost less than the yoke acting on the tensioning lever which was previously described.

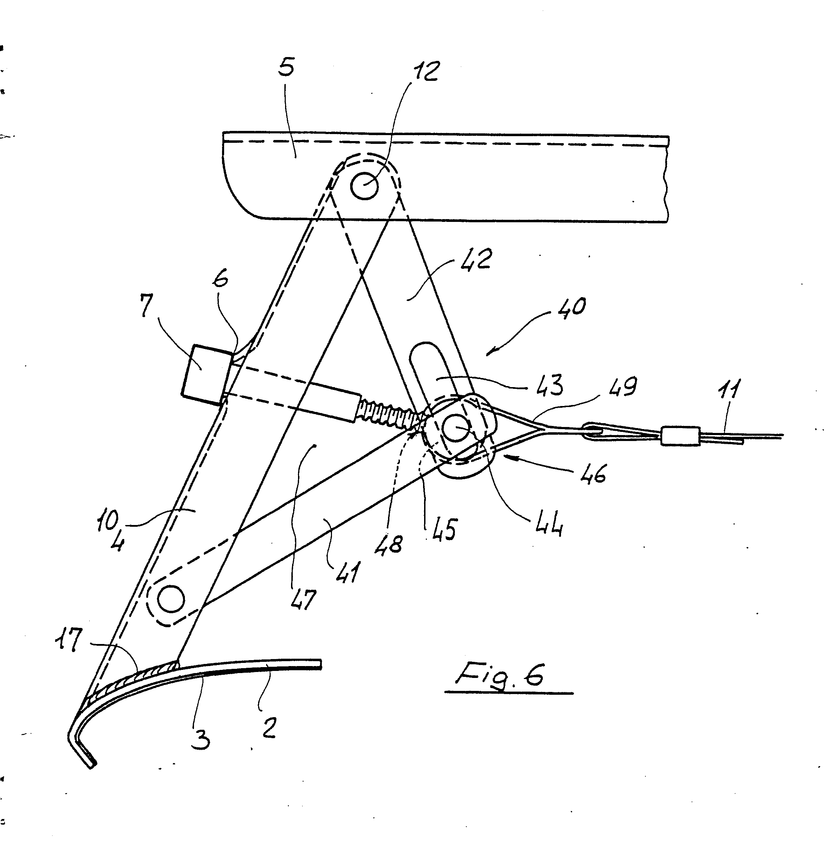

Referring to Figure 6, another embodiment of the present invention characterised by a double lever 40, comprising a component 41 hinged in proximity to the support plate 2 and a second component 42 hinged to the cross bar 5 by the upper pin 12.

The latter component 42 is provided with a slot 43 in which the pin 44 which is an integral part of tensioning roller 45 can move.

In this case, the roller 45 has a triple function: it acts as a mobile fulcrum on the apex 46 of the trapezium 47 formed by the tensioning levers 41-42 and the load-bearing box-bar 4 including the threaded hole 48 into which the tensioning component 7 is screwed.

This detailed description clearly demonstrates that the invention presents a practical solution to the problem of mounting roof-racks, ski-racks and similar devices in cars which have roofs without runnels and show that the embodiments described and represented do not constitute the limits of this invention but that, on the contrary, it must be understood that numerous modifications, additions, variations or substitutions can be made to the present invention without violating either its spirit or its scope and without prejudice to the scope of protection, as defined in the attached claims.

## Claims

1. Fastening device for roof-racks, ski-racks and similar equipment, particularly for vehicles with roofs which do not have runnels, characterised by the fact that it comprises a shaped support plate, an integral part of a bar which can be connected to the bar of the opposed plate by means of a rod which is placed under tension by a special system of levers or trapezium which is easily adjusted by means of a threaded component which is manipulated manually.

2. Fastening device, according to claim 1, characterised by the fact that the profile of the support plate is shaped to conform with the curvature of the roofs of vehicles without runnels and is such that it can insert itself between the rabbet of the weather seal of the door and the shoulder of the car roof itself, being fixed to the bar by welding, rivetting or any other type of mechanical means of attachment.

3. Fastening device, according to claim 1, characterised by the fact that the bar which is incorporated with the plate is hinged to the crossbar of the roof-rack so that there is even more possibility of adapting it to the rounded lateral conformation of vehicles without runnels.

4. Fastening device, according to claim 1, characterised by the fact that the locking rod is tensioned by a trapezium acting between the base of the bar and the hinge of the crossbar, by means of a threaded stretching component, preferably implemented by means of a hexagonal head screw which can be adjusted with the relative screwing tool, and which meshes into the thread of a bush, cylinder, yoke or similar articulated component, acting on the tensioning lever.

5. Fastening, according to claim 4, characterised by the fact that the apex of the said trapezium comprises a roller which has the triple function of a mobile fulcrum, constraint for the tension rod and threaded seat for the tensioning screws.

6. Fastening, according to claim 1, characterised by the fact that the fulcrum of the tensioning lever is in proximity to the support plate, in order to obtain greater adherence pressure of the lip of the plate, always acting through a tension rod.

7. Fastening, according to claim 1, characterised by the fact that the fulcrum of the tensioning lever is the pin which unites the rod and the crossbar, in such a way that it also acts as a self-centring mechanism for the roof-rack, regardless of the curved conformation of the roof of the vehicle and, therefore, of the derived angulation of the rod itself.

8. Fastening for roof-racks, ski-racks and similar equipment, particularly for vehicles with roofs without runnels, as previously described and as illustrated in the various attached descriptive drawings, for the objectives described above.

0 273 480

Fig. 1

Fig. 2

Fig. 3

Fig. 4

_Fig.5_

0 273 480

Fig. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-3 313 267 (AUDI AG)<br>* Claim 1; figures 1,2 * | 1-4,8 | B 60 R 9/04 |
| A | | 6,7 | |
| X | DE-U-8 507 978 (PETER)<br>* Claim 1; figure 1 * | 1-4,8 | |
| A | | 6,7 | |
| A | FR-A-2 556 667 (CAM)<br>* Page 8, lines 18-31; figure 5; page 9, line 30 - page 10, line 1; figure 6 * | 1-8 | |

TECHNICAL FIELDS SEARCHED (Int. Cl.4)

B 60 R

The present search report has been drawn up for all claims

| Place of search | Date of completion of the search | Examiner |
|---|---|---|
| THE HAGUE | 01-03-1988 | MAUSSER, T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)